# EUROPÄISCHE PATENTSCHRIFT

(11) **EP 3 191 560 B1**
(45) Veröffentlichungstag und Bekanntmachung des Hinweises auf die Patenterteilung: **27.02.2019**
(21) Anmeldenummer: 15760404.2
(22) Anmeldetag: 25.08.2015
(51) Int. Cl.: C09D 183/04, G02F 1/1335

(54) **VERWENDUNG FLÜSSIGER BESCHICHTUNGSZUSAMMENSETZUNGEN, VERFAHREN ZU IHRER HERSTELLUNG**
USE OF LIQUID COATING COMPOSITIONS, METHODS FOR THEIR PRODUCTION
UTILISATION DE COMPOSITIONS DE REVÊTEMENT LIQUIDES, PROCÉDÉ DE FABRICATION

(30) Priorität: 12.09.2014 DE 102014218292
(43) Veröffentlichungstag der Anmeldung: 19.07.2017
(73) Patentinhaber: Evonik Degussa GmbH, 45128 Essen (DE)
(72) Erfinder: ANSELMANN, Ralf, 59348 Lüdinghausen (DE); HALLACK, Markus, 46514 Schermbeck (DE); HOPPE, Arne, 45136 Essen (DE); MERKULOV, Sonja, 45772 Marl (DE); PFEIFER, Holger, 63457 Hanau (DE); RENNER, Gerhard, 64589 Stockstadt am Rhein (DE)
(86) Internationale Anmeldenummer: PCT/EP2015/069394
(87) Internationale Veröffentlichungsnummer: WO 2016/037843

(56) Entgegenhaltungen:
- US-A1- 2002 076 565
- US-A1- 2008 107 864
- DATABASE WPI Week 198215 Thomson Scientific, London, GB; AN 1982-29454E XP002746576, -& JP S57 38865 A (FUJITSU LTD) 3. März 1982 (1982-03-03)
- DATABASE WPI Week 201363 Thomson Scientific, London, GB; AN 2013-P03651 XP002746577, -& CN 103 030 358 A (INNOTEK TECHNOLOGY LTD) 10. April 2013 (2013-04-10)
- DATABASE WPI Week 201271 Thomson Scientific, London, GB; AN 2012-M98929 XP002746578, -& JP 2012 188636 A (ECO-MISSION KK) 4. Oktober 2012 (2012-10-04)
- C A Milea ET AL: "THE INFLUENCE OF PARAMETERS IN SILICA SOL-GEL PROCESS", Bulletin of the Transilvania University of Brasov. Engineering Sciences. Series I, 1. Januar 2011 (2011-01-01), Seiten 59-2011, XP055221112, Brasov Gefunden im Internet: URL:http://webbut.unitbv.ro/bu2011/Series I/BULETIN I PDF/Milea CA.pdf [gefunden am 2015-10-15]

## Beschreibung

Die Erfindung betrifft die Verwendung einer flüssige Beschichtungszusammensetzung für die Herstellung optisch dichter, temperaturstabiler, nichtleitender Beschichtungen, und Verfahren zur ihrer Herstellung.

Optisch dichte, nichtleitende Beschichtungen sind essentiell für viele Anwendungen in der Halbleitertechnologie. Insbesondere für die Erzeugung von Displays werden optisch dichte und nichtleitende Beschichtungszusammensetzungen benötigt, um den Rahmen des Displays einzufassen, elektronische Bauteile vor Licht zu schützen und/oder zur Pixelseparation der Farbfilter zu dienen. Die die vorgenannten Aufgaben erfüllende, aus den Beschichtungszusammensetzungen herstellbare Beschichtung wird - da sie oft zu schwarzen Beschichtungen führen - als Schwarzmatrix (Black Matrix) bezeichnet. Sie können jedoch im Prinzip jede beliebige Farbe aufweisen. Bevorzugt sind Schwarzmatrizen jedoch schwarz oder weiß.

Im Stand der Technik sind verschiedene Verfahren zur Herstellung von Schwarzmatrizen bekannt. So können Schwarzmatrizen z.B. durch Abscheidung von Chrom, insbesondere über Sputtering, hergestellt werden (EP 0 740 183 A1). Diese Methode hat jedoch den Nachteil, dass entsprechende Verfahren apparativ sehr aufwändig sind, große Aufbauten erfordern und die Integration in Prozesse zur Herstellung von Displays sehr aufwändig ist. Nachteilig an der Verwendung von Chrom ist weiterhin, dass es ein Schwermetall und somit umweltschädlich und sehr teuer in der Entsorgung ist.

Eine andere Möglichkeit zur Erzeugung von Schwarzmatrizen setzt Lösungen umfassend gelöste organische Farbstoffe ein (EP 0 740 183 A1). Zur Erzielung von Beschichtungen mit einer hohen Farbtiefe und einer gleichmäßigen Farbverteilung sind diese Beschichtungszusammensetzungen jedoch nicht geeignet. Insbesondere schwarze Beschichtungszusammensetzungen können mit diesen Lösungen nicht hergestellt werden, da es bislang keine organischen Farbstoffe gibt, die zu tiefschwarzen Beschichtungen führen. Aus diesem Grund werden oft Gemische verschiedener Farbstoffe in Lösung eingesetzt, die jedoch den Nachteil haben, zu inhomogenen Färbungen zu führen. Weiterhin sind entsprechende Beschichtungen auch nicht geeignet, Temperaturen, wie sie bei der Displayerzeugung oft eingesetzt werden, stand zu halten. Aus diesem Grund haben Lösungen enthaltend organische Farbstoffe bislang nicht zu einer kommerziellen Verwendung bei der Displayherstellung geführt.

Eine dritte Möglichkeit zur Erzeugung von Schwarzmatrices beruht auf der Verwendung einer Beschichtungszusammensetzung umfassend ein Bindemittel und ein Pigment. Als Pigmente können dabei bevorzugt Ruß (insbesondere 'Carbon Black', d. h. Pigmentruß) oder Metalloxide, insbesondere Spinell-Farbpigmente, eingesetzt werden. Dabei sind Spinell-Farbpigmente bevorzugt, da die Erzeugung nicht leitender Beschichtungen mit Pigmentruß in hohen Konzentrationen schwierig ist, da vermieden werden muss, dass die resultierenden Beschichtungen bei der Trocknung leitend werden. Weiterhin lassen sich Pigmentruße und viele andere Pigmente nur schlecht dispergieren oder neigen zum Koagulieren, was wiederum einen negativen Einfluss auf die Güte der Schwarzmatrixschicht hat. Schließlich sind Spinell-Pigmente sehr temperaturstabil und können - anders als Pigmentruße und Nicht-Spinell-Pigmente - ggf. auch erst in den gehärteten Beschichtungen gebildet werden (Silva et al., Journal of Magnetism and Magnetic Materials, 272-276 (2004) e 1851-e1853). Die Farbpigmente können auch oberflächenbehandelt sein (vgl. z. B. DE 40 14 928 C1 und US 6,136,083 A).

Ausschließlich aus mindestens einem Bindemittel und mindestens einem Pigment bestehende Beschichtungszusammensetzungen für Schwarzmatrices (Pulverbeschichtungen) haben jedoch den Nachteil, dass sie zu sehr inhomogen dicken Beschichtungen führen und zudem nicht gut strukturiert werden können. Aus diesem Grund weisen bindemittelhaltige Beschichtungszusammensetzungen vorteilhafterweise noch mindestens ein Lösemittel auf.

Im Stand der Technik bekannt sind organische Bindemittel für lösemittelhaltige Beschichtungszusammensetzungen für Schwarzmatrices. So offenbart US 5,780,201 A lösemittelhaltige Beschichtungszusammensetzungen umfassend (neben einem Farbstoff) ein Polyimidharz und ein Pigment auf Basis eines gemischten Metalloxides. Auch US 5,814,434 A offenbart eine zur Herstellung von Schwarzmatrices geeignete Beschichtungszusammensetzung umfassend ein gemischtes Oxid mindestens zweier Metalle und ein Bindemittel, bei dem es sich bevorzugt um ein organisches Bindemittel handelt. Der Einsatz organischer Bindemittel hat jedoch den Nachteil, dass die entsprechenden Beschichtungszusammensetzungen nur bei relativ niedrigen Temperaturen konvertiert werden können und die mit ihnen hergestellten Beschichtungen keinen hohen Temperaturen ausgesetzt werden können, da sie sich z. B. zersetzen, verfärben oder leitfähig werden. Da bei der Displayherstellung, insbesondere bei der Herstellung von Touchscreens, jedoch üblicherweise an anderer Stelle hohe Temperaturen erforderlich sind, muss eine Schwarzmatrix auf Basis eines organischen Bindemittels auf einem zusätzlichen Träger, insbesondere einem zusätzlichen Glas, aufgeklebt werden. Dies ist aufgrund der höheren Dicke der Displays, dem höheren Gewicht des Displays und weiterhin vor allem aufgrund der verminderten Akkuleistung bzw. des erhöhten Strombedarfs (da die zusätzliche Schicht die Strahlung des Displays absorbiert und zur Erzielung einer gleich hellen Darstellung eine höhere Leistung erforderlich ist) des Displays nachteilig. Weiterhin gestaltet es den Produktionsprozess aufwändiger.

US 5,814,434 A offenbart prinzipiell für höhere Temperaturen geeignete anorganische Alternativen. Die vorgeschlagenen Lösungen einer Glasfritte mit niedrigem Schmelzpunkt, Organosiliciumverbindungen wie Ethoxy-Siliciumdioxid und Organobleiverbindungen sind jedoch nur als Pulverbeschichtungen geeignet und liefert somit inhomogene dicke Beschichtungen, die sich nicht zur Erzeugung fein strukturierter Schwarzmatrices eignen. Die ebenfalls in US 5,814,434 A offenbarten anorganisch-organischen Mischsysteme eignen sich wiederum nur für die Härtung bei niedrigerer Temperatur.

DE 2 141 169 A1 offenbart Schutzüberzugsmassen, die ein Siloxan, organische Löser und 10 - 70 % von Oxiden eines feuerfesten Füllstoffs aufweisen, wobei die als Streckmittel eingesetzten feuerfesten Oxide u.a. Spinelle sein können.

Auch DE 44 17 405 A1 offenbart aus hydrolysierbaren Silanen herstellbare Beschichtungszusammensetzungen, die Wasser und/oder Lösemittel aufweisen und die weiterhin ggf. einen feinskaligen Füllstoff aufweisen können, bei dem es sich auch um Oxide von Metallen, insbesondere Spinelle, und Ruß handeln kann. DE 103 61 632 A1 offenbart ein Verfahren zur Herstellung eines mit einer kohlenstoffhaltigen Beschichtung beschichteten Substrats, bei dem ein Substrat mit einer Kohlenstoff-Modifikation, einem organischanorganischen Bindemittel, bei dem es sich um ein Hydrolysat oder Vorkondensat aus einem oder mehreren Silanen handeln kann, und Feststoffpartikeln, bei denen es sich um Metalloxide oder Metalloxidhydrate (einschließend Spinellen) handeln kann, beschichtet wird.

Trotz ihrer vielen Vorteile sind Oxid-Pigmente und Mischoxid-Pigmente (einschließend Spinell-Pigmente) im Allgemeinen jedoch nachteilig, da mit ihnen bislang keine besonders fein strukturierten Beschichtungen hergestellt werden können. Besonders fein strukturierte Beschichtungen können für andere Beschichtungssysteme über Ätzprozesse, bei denen partiell oder flächig aufgetragene Beschichtungen zur Erzeugung einer besonders feinen Struktur unter Entfernung eines Teils oder eines Bestandteils der aufgetragenen Beschichtung behandelt wird, erzeugt werden. Für Beschichtungszusammensetzungen für Schwarzmatrices enthaltend Mischoxid-Pigmente einschließlich Spinell-Pigmente existiert ein solches Verfahren jedoch bislang nicht. Ein Weg zu besonders fein strukturierten Schwarzmatrices auf Basis dieser Pigmente ist somit bislang nicht offenbart.

Es ist somit die Aufgabe der vorliegenden Erfindung, die Nachteile des Standes der Technik zu überwinden und für die Herstellung nichtleitender Schichten, insbesondere für die Herstellung von Schwarzmatrices geeignete Beschichtungszusammensetzungen bereitzustellen, die zu guten, besonders fein strukturierbaren und auch gegenüber hohen Temperaturen beständigen, nichtleitenden Schichten, insbesondere Schwarzmatrices führen. Insbesondere ist es Aufgabe der vorliegenden Erfindung, eine Beschichtungszusammensetzung bereitzustellen, mit denen Beschichtungen hergestellt werden können, die sich insbesondere mit schwachen Säuren bzw. mit schwachen Säuregemischen strukturieren lassen.

Diese Aufgabe wird gelöst durch die erfindungsgemäße Verwendung einer flüssigen Beschichtungszusammensetzung umfassend i) mindestens ein anorganisches Bindemittel der generischen Formel SiₐR¹_{b}O_{c}(OR²)_{d} mit a ≥ 2, b ≥ 0, c ≥ 1, d ≥ 5 und R¹ und R² = organischem Rest, ii) mindestens ein Lösemittel und iii) mindestens ein Oxid-Pigment, das nach Zugabe eines Gemisches bestehend aus 15 ml 1 M Oxalsäure und 15 ml 20 %iger wässriger Salzsäure (HCl) bezogen auf 1 g Substanz bei Standardbedingungen (SATP: 25 °C, 1,013 bar) zu einer Temperaturerhöhung von mindestens 4 °C führt.

Die Beschichtungszusammensetzungen lassen sich sehr gut strukturieren. Weiterhin haben die erfindungsgemäßen Beschichtungszusammensetzungen den Vorteil, dass sie sich bereits mit schwachen Säuren bzw. schwachen Säuregemischen erfolgreich sehr fein strukturieren lassen und somit eine Ätzung über z.B. hochtechnische Vakuum-Prozesse (wie z.B. beim Trockenätzen) oder mit starken bzw. stark gesundheits- bzw. umweltschädlichen Säuren (wie Flusssäure) nicht erforderlich ist.

Die exotherme Reaktion nach der Zugabe des 30 ml umfassenden Gemisches aus 15 ml 1 M Oxalsäure und 15 ml 20 %iger wässriger Salzsäure (HCl) zu 1 g Oxid-Pigment, die sich für die erfindungsgemäß einsetzbaren Oxid-Pigmente im Gegensatz zu anderen Oxid-Pigmenten durch eine insbesondere 60 Sekunden nach der bei SATP erfolgten Zugabe und nachfolgendem Rühren bei 200 rpm erhöhte Temperatur von mindestens 29 °C zeigt, ist ein Hinweis auf eine Reaktivität und somit eine entsprechende Eignung des jeweiligen Mischoxid-Pigmentes.

Unter einer "flüssigen" Beschichtungszusammensetzung ist weiterhin vorliegend eine Zusammensetzung zu verstehen, die unter Standardbedingungen (SATP: 25 °C, 1,013 bar) flüssig vorliegt.

Die Beschichtungszusammensetzung weist mindestens ein Oxid-Pigment auf, das die beschriebene Eigenschaft, zu einer Temperaturerhöhung zu führen, zeigt. Unter Oxid-Pigmenten können dabei i) Pigmente auf Basis eines Oxides einer Oxidationsstufe eines (Halb)Metalls, ii) Pigmente auf Basis gemischter Oxide eines (Halb)Metalls in mehr als einer Oxidationsstufe (gemischtvalente Oxide eines (Halb)Metalls, z.B. Eisenoxid Fe₃O₄) und iii) Pigmente auf Basis gemischter Oxide (Mischphasenoxidpigmente) von mindestens zwei (Halb)Metallen in jeweils einer oder mehreren Oxidationsstufen verstanden werden. Der Begriff der (Halb)Metalle umfasst dabei gleichermaßen Metalle und Halbmetalle.

Bevorzugt handelt es sich bei dem mindestens einen Oxid-Pigment um ein Pigment auf Basis eines gemischten Oxids eines (Halb)Metalls in mehr als einer Oxidationsstufe (z.B. Eisenoxid Fe₃O₄) oder um ein Pigment auf Basis gemischter Oxide (d.h. um ein Mischphasenoxidpigment) von mindestens zwei (Halb)Metallen in jeweils einer oder mehreren Oxidationsstufen. Weiter bevorzugt handelt es sich bei dem Pigment um ein Pigment auf Basis gemischter Oxide von mindestens zwei (Halb)Metallen, die wiederum jeweils in einer oder in mehreren Oxidationsstufen vorliegen können. Ganz besonders bevorzugt handelt es sich bei dem Pigment um ein Pigment auf Basis gemischter Oxide von mindestens zwei Metallen, von denen mindestens zwei Metalle in unterschiedlichen Oxidationsstufen vorliegen (gemischtvalente Oxide). Entsprechende Verbindungen sind Oxide und/oder Mischoxide, und können z.B. eine Spinell-Struktur oder eine inverse Spinell-Struktur aufweisen (und somit einphasige Mischphasenpigmente sein), oder aber auch als Gemisch unterschiedlicher Kristallphasen vorliegen.

Besonders gute Ergebnisse werden erzielt mit Pigmenten, bei denen es sich um Eisen-Mangan-Mischoxide handelt. Weiter besonders bevorzugt sind Kupferoxid-haltige Eisen-Mangan-Mischoxide, mit denen ganz besonders gute Ergebnisse erzielt werden können. Unter entsprechenden "Mischoxid"-Pigmenten sind dabei sowohl einphasige als auch mehrphasige Mischkristall-Oxide zu verstehen.

Ganz besonders bevorzugte Kupferoxid-haltige Eisen-Mangan-Mischoxide sind solche, die über eine Calcinierung von Mangan(II)oxid (MnO), Mangan(III)oxid (Mn₂O₃), Eisen(II)oxid (FeO), Eisen(III)oxid (Fe₂O₃) und Kupfer(II)oxid (CuO) erhältlich sind. Entsprechende Mischoxide werden auch vom Colour Index (kurz C.I.) als "Pigment Black 26" bezeichnet. C.I. ist ein seit 1925 existierendes Nachschlagewerk aller gebräuchlichen Farbmittel und Farbstoffbasis-Chemikalien und gilt als Standardwerk auf dem Gebiet der Pigment- und Farbstoffchemie. Herausgegeben wird der Colour Index von der British Society of Dyers and Colourists und der American Association of Textile Chemists and Colorists.

Entsprechende besonders bevorzugte Pigmente sind unter der Bezeichnung Black 444 von The Shepherd Color Company, USA, Daipyroxide Black 9550 von Dainichiseika Color & Chemicals Mfg. Co., Ltd., Japan, Spinellschwarz 47400 von Kremer Pigmente GmbH und Co. KG, Deutschland und PS 24-3060 PK von Ferro GmbH, Deutschland erhältlich. Auch wenn diese besonders bevorzugten Pigmente als Mangan-Eisenschwarz-Spinelle bezeichnet werden, ist nicht gesichert, dass diese Pigmente überhaupt oder ausschließlich eine Spinellstruktur aufweisen.

In Ergänzung zu den genannten Oxid-Pigmenten können in der Zusammensetzung auch weitere Farbpigmente, insbesondere Titandioxid, Zinkweiß, Spinellblau, Lithopone, Bariumsulfat, Zinkoxid, Calciumcarbonat, Cristobalit oder Kaolin vorhanden sein. Bevorzugt enthalten die erfindungsgemäßen Zusammensetzungen jedoch nur die Oxid-Pigmente.

Weiterhin ist die Zusammensetzung zur Erzielung besonders gut nichtleitender Beschichtungen bevorzugt kohlenstofffrei, d.h. sie enthält keine Anteile von Kohlenstoffmodifikationen wie Ruß, Graphit, Aktivkohle, Kohlenstaub, Fullerenen, Graphen und dergleichen.

Der Anteil an Oxid-Pigmenten mit der beschriebenen Eigenschaft in der Zusammensetzung beträgt bevorzugt bezogen auf die Gesamtmasse der Zusammensetzung 10 bis 50, weiter bevorzugt 15 bis 40, besonders bevorzugt 15 bis 35 Gew.-%.

Die Beschichtungszusammensetzungen weisen neben den gewünschten Vorteilen überraschenderweise weiterhin auch eine besonders hohe optische Dichte auf.

Das mindestens eine anorganische Bindemittel - formal eine Oxyalkoxysilanverbindung oder eine alkylierte Oxyalkoxysilanverbindung - ist ein Kondensationsprodukt von Alkoxysilanen und ggf. alkylierten Alkoxysilanen und lässt sich aus diesen säure- oder säureesterkatalysiert herstellen. Als Edukte können bevorzugt Alkoxysilane der generischen Formel Si(OR²)₄ mit R² = organischem Rest und alkylierte Alkoxysilane der generischen Formel SiR¹(OR²)₃ mit R¹ und R² = organischem Rest eingesetzt werden. Die entsprechende Umsetzung lässt sich besonders gut in Wasser durchführen. Besonders gut lässt sich die Umsetzung mit Phosphorsäureestern, besonders bevorzugt mit Phosphorsäuremonomethylestern durchführen. Als Edukte können bevorzugt Alkoxysilane der generischen Formel Si(OR²)₄ und alkylierte Alkoxysilane SiR¹(OR²)₃ mit R¹ bzw. R² = -CH₃, -CH₂CH₃, -CH₂CH₂CH₃, -CH(CH₃)₂ eingesetzt werden. Obwohl die Reaktion in Gegenwart von Wasser durchgeführt wird, ist in der Regel nach Abschluss der Reaktion, d.h. nach Bildung des Bindemittels, Wasser nur in sehr geringen Anteilen von typischerweise < 5 Gew,-%, insbesondere < 2 Gew.-%, weiter insbesondere < 1 Gew.-% bezogen auf die Gesamtmasse der Beschichtungszusammensetzung vorhanden.

Das resultierende Bindemittel der generischen Formel SiₐR¹_{b}O_{c}(OR²)_{d} weist bevorzugt entsprechend Reste R¹ und R² = -CH₃, -CH₂CH₃, -CH₂CH₂CH₃, -CH(CH₃)₂, bevorzugt R¹ und R² = -CH₃ und/oder -CH₂CH₃ auf.

Besonders gute Beschichtungen, die eine besonders geringe Sprödigkeit ausweisen, können bei Einsatz eines Gemisches von SiCH₃(OCH₂CH₃)₃ und Si(OCH₂CH₃)₄ erzielt werden. Die resultierenden Bindemittel weisen entsprechend die Reste R¹ = -CH₃ und R² = -CH₂CH₃ auf. Besonders gut geeignet zur Herstellung fein strukturierbarer Schwarzmatrices, die besonders homogene Schichten mit niedrigen Oberflächenrauhigkeiten aufweisen, sind Beschichtungszusammensetzungen, die entsprechende Bindemittel mit a = 5 bis 150, bevorzugt a = 20 bis 100, bevorzugt a = 30 bis 80 Si-Atomen aufweisen.

Der Maximalwert für die Summe aus b + d liegt, insbesondere bei kleinen Werten für a, nahe bei 4·a. Der Wert für c beträgt mindestens 1 und steht mit den Werten a, b und d in der Beziehung 4·a = b + 2·c + d. Bevorzugt beträgt das Verhältnis von c zu a zur Erzielung besonders guter Eigenschaften der resultierenden Schicht im Mittel 1,1 bis 2,0, weiter bevorzugt 1,15 bis 1,8, ganz besonders bevorzugt 1,2 bis 1,5.

Bevorzugt sind die Beschichtungszusammensetzungen weiterhin im Wesentlichen frei von organischen Bindemitteln (d. h. der Anteil an organischem Bindemittel, bezogen auf die Gesamtmasse an Bindemittel, beträgt weniger oder gleich 5 Gew.-%, bevorzugt weniger oder gleich 2 Gew.-%, weiter bevorzugt 0 Gew.-%), da sie dann den großen Vorteil aufweisen, für Temperschritte mit bis zu 800 °C einsetzbar zu sein.

Das anorganische Bindemittel liegt zur Erzielung besonders guter Ergebnisse bevorzugt in Anteilen von 5 bis 75 Gew.-%, weiter bevorzugt 10 bis 45 Gew.-%, bezogen auf die Gesamtmasse der Beschichtung, vor.

Die Zusammensetzung weist weiterhin mindestens ein Lösemittel auf. Prinzipiell sind sowohl organische Lösemittel als auch Wasser als Lösemittel denkbar. Besonders gute Beschichtungen resultieren jedoch, wenn das mindestens eine Lösemittel ein organisches Lösemittel oder ein Gemisch organischer Lösemittel ist. Bevorzugt handelt es sich bei dem organischen Lösemittel um einen Alkohol, einen Alkylester, einen Alkoxyalkohol und/oder einen Alkoxyalkylester. Ganz besonders bevorzugt handelt es sich bei dem mindestens einen Lösemittel um 1-Methoxy-2-propanol, Ethyllactat, Butylacetat, Ethylbenzoat, Propylenglykolmonomethylethylacetat,Tri(ethylenglycol)monoethylether (Ethyltriglycol, TGEE), Ethanol, Isopropanol und/oder Butanol.

Generell beträgt der Anteil des bzw. der Lösemittel bevorzugt 20 - 80, weiter bevorzugt 35 - 70 Gew.-% bezogen auf die Gesamtmasse der Beschichtung.

Die Zusammensetzung kann weiterhin neben den essentiellen Bestandteilen anorganisches Bindemittel, Lösemittel und Oxid-Pigment auch noch weitere Zusätze und Additive aufweisen. So kann die Zusammensetzung neben dem mindestens einen Oxid-Pigment weitere Pigmente oder Farbstoffe aufweisen. Bevorzugt weist die erfindungsgemäße Zusammensetzung als Pigmentbestandteile jedoch nur Oxid-Pigmente auf. Weiterhin kann die Zusammensetzung als Additiv zur Erzielung positiver Eigenschaften mindestens ein Netz-, Dispergier- und/oder Verlaufsadditiv aufweisen. Besonders bevorzugte Additive sind Additive auf Basis von Urethancopolymeren oder z.B. mit Siloxanen modifizierten Polyethern. Besonders bevorzugte Additive sind die im Handel erhältlichen Produkte mit der Bezeichnung TEGO Dispers 656 und TEGO Glide 450 (jeweils der Fa. Evonik Goldschmidt GmbH) und BYK 111 (der Byk Chemie GmbH). Weiterhin kann der erfindungsgemäßen Beschichtungszusammensetzung auch zur Erzielung vorteilhafter Eigenschaften partikuläres SiOₓ als Füllstoff zugesetzt sein.

Bevorzugt weist die bei dem erfindungsgemäßen Verfahren eingesetzte Zusammensetzung zur Erzielung einer besonders guten Beschicht-, Verdruck- bzw. Versprühbarkeit eine Viskosität von 1 mPa·s bis 10 Pa·s, insbesondere 1 mPa·s bis 100 mPa·s bestimmt nach DIN 53019 Teil 1 bis 2 und gemessen bei 20 °C auf. Entsprechende Viskositäten können durch Zugabe von Polymeren, Cellulosederivaten, oder z.B. unter der Handelsbezeichnung Aerosil erhältlichem SiO₂, und insbesondere bevorzugt durch PMMA, Polyvinylalkohol, Urethanverdicker oder Polyacrylatverdicker eingestellt werden.

Zusätze und Additive werden, so sie überhaupt vorhanden sind, üblicherweise in Anteilen von maximal 10, bevorzugt maximal 3 Gew.-% bezogen auf die Gesamtmasse der Zusammensetzung eingesetzt.

Die Erfindung betrifft weiterhin ein Verfahren zur Herstellung von wässrigen Beschichtungszusammensetzungen, wie in Anspruch 12 definiert.

Das resultierende Bindemittel der generischen Formel SiₐR¹_{b}O_{c}(OR²)_{d} weist = -CH₃ und R² = -CH₂CH₃ auf.

Besonders gute Beschichtungen, die eine besonders geringe Sprödigkeit ausweisen, können bei Einsatz des Gemisches von SiCH₃(OCH₂CH₃)₃ und Si(OCH₂CH₃)₄ erzielt werden. Die resultierenden Bindemittel weisen entsprechend die Reste R¹ = -CH₃ und R² = -CH₂CH₃ auf. Bevorzugt wird nach der Reaktion und vor dem Versetzen mit dem mindestens einen Oxid-Pigment die gelierte Lösung zur Erzielung besonders guter im Hinblick auf Oberflächenrauhigkeit, Härte, Homogenität und Beschichtbarkeit geeigneter Beschichtungszusammensetzungen mit dem Lösemittel versetzt. Besonders gute Ergebnisse lassen sich erzielen, wenn das Lösemittel ein Alkohol, ein Alkylester (insbesondere ein Acetat oder ein Lactat), ein Alkoxyalkohol und/oder ein Alkoxyalkylester ist. Ganz besonders bevorzugt handelt es sich bei dem Lösemittel um ein Lösemittel ausgewählt aus der Gruppe bestehend aus 1-Methoxy-2-propanol, Ethyllactat, Butylacetat, Ethylbenzoat, Propylenglykolmonomethylethylacetat, Tri(ethylenglycol)monoethylether, Ethanol, Isopropanol und Butanol, da mit diesen Zusätzen besonders glatte und homogene Schichten hergestellt werden können.

Das bzw. die Lösemittel werden bevorzugt in Anteilen von 20 - 80, weiter bevorzugt 35 - 70 Gew.-% bezogen auf die Gesamtmasse der Beschichtung zugegeben.

Das anorganische Bindemittel wird weiterhin bevorzugt zur Erzielung besonders guter Ergebnisse in Anteilen von 5 bis 75 Gew.-%, weiter bevorzugt 10 bis 45 Gew.-%, bezogen auf die Gesamtmasse der Beschichtung zugegeben.

Weiterhin wird bei dem erfindungsgemäßen Verfahren mindestens ein Oxid-Pigment zugegeben, das nach Zugabe zu einem Gemisch von 15 ml 1 M Oxalsäure und 15 ml 20 %iger wässriger Salzsäure bezogen auf 1 g Substanz bei Standardbedingungen (SATP: 25 °C, 1,013 bar) zu einem Temperaturanstieg von mindestens 4 °C führt.

Unter Oxid-Pigmenten können dabei i) Pigmente auf Basis eines Oxides einer Oxidationsstufe eines (Halb)Metalls, ii) Pigmente auf Basis gemischter Oxide eines (Halb)Metalls in mehr als einer Oxidationsstufe (gemischtvalente Oxide eines (Halb)Metalls, z.B. Eisenoxid Fe₃O₄) und iii) Pigmente auf Basis gemischter Oxide (Mischphasenoxidpigmente) von mindestens zwei (Halb)Metallen in jeweils einer oder mehreren Oxidationsstufen verstanden werden. Der Begriff der (Halb)Metalle umfasst dabei gleichermaßen Metalle und Halbmetalle.

Bevorzugt handelt es sich bei dem mindestens einen Oxid-Pigment um ein Pigment auf Basis eines gemischten Oxids eines (Halb)Metalls in mehr als einer Oxidationsstufe (z.B. Eisenoxid Fe₃O₄) oder um ein Pigment auf Basis gemischter Oxide (d.h. um ein Mischphasenoxidpigment) von mindestens zwei (Halb)Metallen in jeweils einer oder mehreren Oxidationsstufen. Weiter bevorzugt handelt es sich bei dem Pigment um ein Pigment auf Basis gemischter Oxide von mindestens zwei (Halb)Metallen, die wiederum jeweils in einer oder in mehreren Oxidationsstufen vorliegen können. Ganz besonders bevorzugt handelt es sich bei dem Pigment um ein Pigment auf Basis gemischter Oxide von mindestens zwei Metallen, von denen mindestens zwei Metalle in unterschiedlichen Oxidationsstufen vorliegen (gemischtvalente Oxide). Entsprechende Verbindungen sind Oxide und/oder Mischoxide, und können z.B. eine Spinell-Struktur oder eine inverse Spinell-Struktur aufweisen (und somit einphasige Mischphasenpigmente sein), oder aber auch als Gemisch unterschiedlicher Kristallphasen vorliegen.

Besonders gute Ergebnisse werden erzielt mit Pigmenten, bei denen es sich um Eisen-Mangan-Mischoxide handelt. Weiter besonders bevorzugt sind Kupferoxid-haltige Eisen-Mangan-Mischoxide, mit denen ganz besonders gute Ergebnisse erzielt werden können. Unter entsprechenden "Mischoxid"-Pigmenten sind dabei sowohl einphasige als auch mehrphasige Mischkristall-Oxide zu verstehen.

Ganz besonders bevorzugte Kupferoxid-haltige Eisen-Mangan-Mischoxide sind solche, die über eine Calcinierung von Mangan(II)oxid (MnO), Mangan(III)oxid (Mn₂O₃), Eisen(II)oxid (FeO), Eisen(III)oxid (Fe₂O₃) und Kupfer(II)oxid (CuO) erhältlich sind. Entsprechende Mischoxide werden auch vom Colour Index (kurz C.I.) als "Pigment Black 26" bezeichnet. C.I. ist ein seit 1925 existierendes Nachschlagewerk aller gebräuchlichen Farbmittel und Farbstoffbasis-Chemikalien und gilt als Standardwerk auf dem Gebiet der Pigment- und Farbstoffchemie. Herausgegeben wird der Colour Index von der British Society of Dyers and Colourists und der American Association of Textile Chemists and Colorists.

Entsprechende besonders bevorzugte Pigmente sind unter der Bezeichnung Black 444 von The Shepherd Color Company, USA, Daipyroxide Black 9550 von Dainichiseika Color & Chemicals Mfg. Co., Ltd., Japan, Spinellschwarz 47400 von Kremer Pigmente GmbH und Co. KG, Deutschland und PS 24-3060 PK von Ferro GmbH, Deutschland erhältlich. Auch wenn diese besonders bevorzugten Pigmente als Mangan-Eisenschwarz-Spinelle bezeichnet werden, ist nicht gesichert, dass diese Pigmente überhaupt oder ausschließlich eine Spinellstruktur aufweisen.

In Ergänzung zu den genannten Oxid-Pigmenten können auch weitere Farbpigmente, insbesondere Titandioxid, Zinkweiß, Spinellblau, Lithopone, Bariumsulfat, Zinkoxid, Calciumcarbonat, Cristobalit oder Kaolin zugegeben werden. Bevorzugt werden der erfindungsgemäßen Zusammensetzungen jedoch nur die Oxid-Pigmente zugegeben.

Weiterhin wird der Zusammensetzung zur Erzielung besonders gut nichtleitender Beschichtungen bevorzugt keine Kohlenstoffkomponente zugegeben, d.h. ihr werden keine Anteile von Kohlenstoffmodifikationen wie Ruß, Graphit, Aktivkohle, Kohlenstaub, Fullerenen, Graphen und dergleichen zugesetzt.

Die Zugabe an Oxid-Pigmenten mit der beschriebenen Eigenschaft in der Zusammensetzung erfolgt bevorzugt bezogen auf die Gesamtmasse der Zusammensetzung in Anteilen von 10 bis 50, weiter bevorzugt 15 bis 40, besonders bevorzugt 15 bis 35 Gew.-%.

Der Zusammensetzung kann weiterhin neben den essentiellen Bestandteilen anorganisches Bindemittel, Lösemittel und Oxid-Pigment auch noch weitere Zusätze und Additive zugegeben werden. So kann der Zusammensetzung neben dem mindestens einen Oxid-Pigment weitere Pigmente oder Farbstoffe zugegeben werden. Bevorzugt werden der erfindungsgemäßen Zusammensetzung als Pigmentbestandteile jedoch nur Oxid-Pigmente zugesetzt. Weiterhin kann der Zusammensetzung als Additiv zur Erzielung positiver Eigenschaften mindestens ein Netz-, Dispergier- und/oder Verlaufsadditiv zugegeben werden. Besonders bevorzugte Additive sind Additive auf Basis von Urethancopolymeren oder z.B. mit Siloxanen modifizierten Polyethern. Besonders bevorzugte Additive sind die im Handel erhältlichen Produkte mit der Bezeichnung TEGO Dispers 656 und TEGO Glide 450 (jeweils der Fa. Evonik Goldschmidt GmbH) und BYK 111 (der Byk Chemie GmbH). Weiterhin kann der erfindungsgemäßen Beschichtungszusammensetzung auch zur Erzielung vorteilhafter Eigenschaften partikuläres SiOₓ als Füllstoff zugesetzt sein.

Bevorzugt wird die Zusammensetzung zur Erzielung einer besonders guten Beschicht-, Verdruck- bzw. Versprühbarkeit auf eine Viskosität von 1 mPa·s bis 10 Pa·s, insbesondere 1 mPa·s bis 100 mPa·s bestimmt nach DIN 53019 Teil 1 bis 2 und gemessen bei 20 °C eingestellt. Entsprechende Viskositäten können durch Zugabe von Polymeren, Cellulosederivaten, oder z.B. unter der Handelsbezeichnung Aerosil erhältlichem SiO₂, und insbesondere bevorzugt durch PMMA, Polyvinylalkohol, Urethanverdicker oder Polyacrylatverdicker eingestellt werden.

Zusätze und Additive werden, so sie überhaupt vorhanden sind, üblicherweise in Anteilen von maximal 10, bevorzugt maximal 3 Gew.-% bezogen auf die Gesamtmasse der Zusammensetzung eingesetzt.

Gegenstand der vorliegenden Erfindung ist weiterhin die Verwendung der erfindungsgemäßen Beschichtungszusammensetzungen zur Erzeugung nichtleitender Beschichtungen, insbesondere zur Erzeugung von Schwarzmatrices.

Gegenstand der vorliegenden Erfindung ist weiterhin ein Verfahren zur Herstellung einer nichtleitenden Beschichtung auf einem Substrat, bei dem ein Substrat mit der beschriebenen flüssigen Beschichtungszusammensetzung beschichtet, ggf. getrocknet und anschließend gehärtet ("konvertiert") wird.

Das erfindungsgemäße Verfahren ist besonders vorteilhaft ein Beschichtungsverfahren ausgewählt aus Druckverfahren (insbesondere Flexo/Gravur-Druck, Inkjet-Druck - ganz besonders bevorzugt kontinuierlicher, thermischer oder Piezo-Inkjet-Druck -, Offset-Druck, digitalem Offset-Druck und Siebdruck), Sprühverfahren, Rotationsbeschichtungsverfahren ("Spin-coating"), Tauchverfahren ("Dip-coating") und Verfahren ausgewählt aus Meniscus Coating, Slit Coating, Slot-Die Coating, und Curtain Coating. Ganz besonders bevorzugt ist das erfindungsgemäße Verfahren ein Druckverfahren oder Rotationsbeschichtungsverfahren. Als Druckverfahren eignet sich insbesondere InkJet sowie Flüssigtonerverfahren (wie z. B. HP Indigo), da diese Verfahren sich besonders gut für eine strukturierte Auftragung des Druckmaterials eignet.

Wird die flüssige Beschichtungszusammensetzung per Rotationsbeschichtung aufgebracht, erfolgt dies bevorzugt bei Geschwindigkeiten zwischen 100 und 5000 rpm. Bevorzugt wird zunächst erst bei einer niedrigen Rotationsgeschwindigkeit von 100 bis 1000 rpm über eine Zeitdauer von 5 s bis 30 s beschichtet und anschließend noch einmal für einen Zeitraum von 10 s bis 120 s die Rotationsgeschwindigkeit auf 1500 bis 5000 rpm erhöht.

Bei dem Substrat, das bei dem erfindungsgemäßen Verfahren eingesetzt wird, handelt es sich bevorzugt um ein Substrat ausgewählt aus Glas, Silicium, Siliciumdioxid, einem Metall- oder Übergangsmetalloxid, einem Metall oder einem polymeren Material, insbesondere PI, PEN, PEEK, PC oder PET.

Nach dem Aufbringen der flüssigen Beschichtungszusammensetzung wird bevorzugt das Lösemittel durch Trocknung entfernt. Weiterhin verhindert dies ein Reißen der Schicht bei dem späteren Härtungsschritt. Dies erfolgt bevorzugt bei Normaldruck thermisch bei Temperaturen zwischen 50 und 150 °C innerhalb von Trocknungszeiten zwischen 30 s und einer Stunde.

Die Härtung erfolgt bevorzugt über Zeitdauern von 5 Minuten bis 1 Stunde bei Temperaturen von 200 °C bis 800 °C.

### Beispiele:

Beispiel 1: Ansetzen der Sol-Gel Matrix
   - Vermengt werden Tetraethoxysilan (TEOS) (15,44 wt. %) und Methyltriethoxysilan (MTES) (66,18 wt. %)
   - Nachfolgend hinzugegeben werden VE-H₂0 (9,18 wt. %) und Phosphorsäureester Hordaphos CCMS (0,02 wt. %)
   - Das Gemisch wird über Nacht auf der Rührplatte gerührt
   - Anschließend wird nochmals VE-H₂O (9,18 wt. %) hinzugegeben
Beispiel 2: Herstellung der Dispersion
   - Vorgelegt wird das Lösemittel 1-Methoxy-2-Propanol (57,85 wt. %), um den Sol-Gel Ansatz auf die geeignete Feststoffkonzentration zu verdünnen
   - Anschließend werden 15,03 wt. % des Sol-Gel Ansatzes beigemengt
   - Das Netz- und Dispergieradditiv TEGO Dispers 710 (2,10 wt. %) wird hinzugefügt
   - Als letztes wird das Pigment Spinellschwarz 47400 "tiefstschwarz (Fe,Mn)(Fe,Mn)₂O₄" der Fa. Kremer Pigmente GmbH & Co. KG hinzugegeben (Menge 25,02 wt. %)
   - Für die Dispergierung mittels Schüttelmischer (Scandex) werden ca. 30 g Zirkonoxid Mahlperlen der Größe 0,4 bis 0,6 mm beigemengt
   - Der Dispersions Ansatz wird für mindestens 2 Stunden, besser aber 10 Stunden, im Schüttelmischer dispergiert
   - Nach der Dispergierung werden die Mahlperlen durch Sedimentation oder Filterung entfernt
Beispiel 3: Substratbeschichtung
   - Als zu beschichtenden Substrate werden Glassubstrate verwendet
   - Die Glassubstrate werden vor dem Beschichten mit organischem Lösemittel (Isopropanol) gereinigt, mit Di-Wasser abgespült und anschließend mit Stickstoff trocken gepustet
   - Die Dispersion wird mittels Rotationsbeschichtungsverfahren (Spincoating) aufgetragen mit folgenden Parametern: 10 sec bei 500 rpm, anschließend 30 sec bei 2000 rpm
   - Vor der Aushärtung erfolgt ein Prebake Schritt, um das Lösemittel langsam zu entfernen und ein Reißen der Schicht zu vermeiden (10 Min bei 100 °C auf der Hot Plate)
   - Nach dem Prebake wird die Temperatur langsam (Zeitrahmen ca. 10 - 15 Min) auf 350 °C erhöht
   - Die Aushärtung findet bei einer Stunde bei 350 °C auf der Hot Plate statt.

## Patentansprüche

1. Verwendung einer flüssigen Beschichtungszusammensetzung umfassend
i. mindestens ein anorganisches Bindemittel der generischen Formel SiₐR¹_{b}O_{c}(OR²)_{d} mit a ≥ 2, b ≥ 0, c ≥ 1, d ≥ 5 und R¹ und R² = organischem Rest
ii. mindestens ein Lösemittel und
mindestens ein Oxid-Pigment, das nach Zugabe eines Gemisches bestehend aus 15 ml 1 M Oxalsäure und 15 ml 20 %iger wässriger Salzsäure bezogen auf 1 g Substanz bei Standardbedingungen zu einem Temperaturanstieg von mindestens 4 °C führt zur Erzeugung nichtleitender Beschichtungen, insbesondere zur Erzeugung von Schwarzmatrices.

2. Verwendung nach Anspruch 1,
**dadurch gekennzeichnet, dass**
das Pigment ein Pigment auf Basis eines gemischten Oxids eines (Halb)Metalls in mehr als einer Oxidationsstufe und/oder ein Pigment auf Basis mindestens zweier gemischter Oxide von mindestens zwei (Halb)Metallen in jeweils einer oder mehreren Oxidationsstufen ist.

3. Verwendung nach Anspruch 2,
**dadurch gekennzeichnet,**
**dass** es ein Eisen-Mangan-Mischoxid ist.

4. Verwendung nach Anspruch 3,
**dadurch gekennzeichnet,**
**dass** es ein Kupferoxid-haltiges Eisen-Mangan-Mischoxid ist.

5. Verwendung nach Anspruch 4,
**dadurch gekennzeichnet,**
**dass** das Eisen-Mangan-Mischoxid über eine Calcinierung von Mangan(II)oxid, Mangan(III)oxid, Eisen(II)oxid und Eisen(III)oxid und Kupfer(II)oxid erhältlich ist.

6. Verwendung nach Anspruch 5,
**dadurch gekennzeichnet,**
**dass** das Pigment der Gruppe der Pigmente mit der Colour-Index-Bezeichnung Pigment Black 26 zugeordnet wird.

7. Verwendung nach einem der vorhergehenden Ansprüche,
**dadurch gekennzeichnet, dass**
der Anteil an Oxid-Pigment bezogen auf die Gesamtmasse der Zusammensetzung 10 - 50 Gew.-% beträgt.

8. Verwendung nach einem der vorhergehenden Ansprüchen,
**dadurch gekennzeichnet, dass**
R¹ bzw. R² = -CH₃, -CH₂CH₃, -CH₂CH₂CH₃, -CH(CH₃)₂ ist.

9. Verwendung einem der vorhergehenden Ansprüche,
**dadurch gekennzeichnet, dass**
das anorganische Bindemittel der generischen Formel SiₐR¹_{b}O_{c}(OR²)_{d} aus einem Gemisch von SiCH₃(OCH₂CH₃)₃ und Si(OCH₂CH₃)₄ hergestellt wurde.

10. Verwendung nach einem der vorhergehenden Ansprüche,
**dadurch gekennzeichnet, dass**
das mindestens eine Lösemittel ausgewählt aus einem Alkohol, einem Alkylester, einem Alkoxyalkohol und/oder einem Alkoxyalkylester ist.

11. Verwendung nach Anspruch 10,
**dadurch gekennzeichnet, dass**
das mindestens eine Lösemittel ausgewählt aus der Gruppe bestehend aus 1-Methoxy-2-propanol, Ethyllactat, Butylacetat, Ethylbenzoat, Propylenglykolmonomethylethylacetat, Tri(ethylenglycol)monoethylether, Ethanol, Isopropanol und Butanol ist.

12. Verfahren zur Herstellung einer Beschichtungszusammensetzung wie in Anspruch 9 beschrieben, umfassend die Schritte
- Versetzen von SiCH₃(OCH₂CH₃)₃ und Si(OCH₂CH₃)₄ in wässriger Lösung mit einer Säure oder einem Säureester,
- Reaktion zu den Verbindungen der generischen Formel Siₐ(CH_{3)b}O_{c}(OCH₂CH₃)_{d} und
- Versetzen
- mit mindestens einem Oxid-Pigment, das nach Zugabe zu einem Gemisch von 15 ml 1 M Oxalsäure und 15 ml 20 %iger wässriger Salzsäure bezogen auf 1 g Substanz bei Standardbedingungen zu einem Temperaturanstieg von mindestens 4 °C führt und
- mindestens einem Lösemittel.

13. Verfahren zur Herstellung einer nichtleitenden Beschichtung auf einem Substrat, bei dem ein Substrat mit einer flüssigen Beschichtungszusammensetzung wie in einem der Ansprüche 1 bis 11 beschrieben, beschichtet, ggf. getrocknet und anschließend gehärtet wird.

## Claims

1. Use of a liquid coating composition comprising
i. at least one inorganic binder of the generic formula SiₐR¹_{b}O_{c}(OR²)_{d} where, a ≥ 2, b ≥ 0, c ≥ 1, d ≥ 5 and R¹ and R² = organic moiety,
ii. at least one solvent, and
at least one oxide pigment which, after addition of a mixture consisting of 15 ml of 1 M oxalic acid and 15 ml of 20% aqueous hydrochloric acid, based on 1 g of substance, under standard conditions, leads to a temperature increase of at least 4°C, for the production of nonconductive coatings, in particular for the production of black matrices.

2. Use according to Claim 1,
**characterized in that**
the pigment is a pigment based on a mixed oxide of a (semi)metal in more than one oxidation state and/or a pigment based on at least two mixed oxides of at least two (semi)metals in respectively one or more oxidation states.

3. Use according to Claim 2,
**characterized in that**
the pigment is an iron-manganese mixed oxide.

4. Use according to Claim 3,
**characterized in that**
the pigment is a copper-oxide-containing iron-manganese mixed oxide.

5. Use according to Claim 4,
**characterized in that**
the iron-manganese mixed oxide is obtainable by way of calcination of manganese(II) oxide, manganese(III) oxide, iron(II) oxide and iron(III) oxide and copper(II) oxide.

6. Use according to Claim 5,
**characterized in that**
the pigment is classified in the group of the pigments with the Colour Index Name Pigment Black 26.

7. Use according to any of the preceding claims,
**characterized in that**
the proportion of oxide pigment, based on the entire composition, is from 10 to 50% by weight.

8. Use according to any of the preceding claims,
**characterized in that**
R¹ and, respectively,
R² = -CH₃, -CH₂CH₃, -CH₂CH₂CH₃, -CH(CH₃)₂.

9. Use according to any of the preceding claims,
**characterized in that**
the inorganic binder of the generic formula SiₐR¹_{b}O_{c}(OR²)_{d} has been produced from a mixture of SiCH₃(OCH₂CH₃)₃ and Si(OCH₂CH₃)₄.

10. Use according to any of the preceding claims,
**characterized in that**
the at least one solvent is selected from an alcohol, an alkyl ester, an alkoxyalcohol and/or an alkoxyalkyl ester.

11. Use according to Claim 10,
**characterized in that**
the at least one solvent is selected from the group consisting of 1-methoxy-2-propanol, ethyl lactate, butyl acetate, ethyl benzoate, propylene glycol monomethyl ethyl acetate, tri(ethylene glycol) monoethyl ether, ethanol, isopropanol and butanol.

12. Process for the production of a coating composition as described in Claim 9, comprising the steps of
- addition, with mixing, of acid or an ester to SiCH₃(OCH₂CH₃)₃ and Si(OCH₂CH₃)₄ in aqueous solution,
- reaction to give the compounds of the generic formula Siₐ(CH_{3)b}O_{c}(OCH₂CH₃)_{d} and
- addition, with mixing,
- of at least one oxide pigment which, after addition of a mixture consisting of 15 ml of 1 M oxalic acid and 15 ml of 20% aqueous hydrochloric acid, based on 1 g of substance, under standard conditions, leads to a temperature increase of at least 4°C and
- of at least one solvent.

13. Process for the production of a nonconductive coating on a substrate, where a substrate is coated with a liquid coating composition as described in any of Claims 1 to 11, optionally is dried and then is cured.

## Revendications

1. Utilisation d'une composition de revêtement liquide, comprenant :
i. au moins un liant inorganique de formule générique SiₐR¹_{b}O_{c}(OR²)_{d} avec a ≥ 2, b ≥ 0, c ≥ 1, d ≥ 5 et R¹ et R² = radical organique,
ii. au moins un solvant, et
au moins un pigment oxyde qui conduit après l'ajout d'un mélange constitué par 15 ml d'acide oxalique 1 M et 15 ml d'acide chlorhydrique aqueux à 20 % par rapport à 1 g de substance dans des conditions standard à une augmentation de température d'au moins 4 °C,
pour la formation de revêtements non conducteurs, notamment pour la formation de matrices noires.

2. Utilisation selon la revendication 1, **caractérisée en ce que** le pigment est un pigment à base d'un oxyde mixte d'un (semi-)métal à plus d'un niveau d'oxydation et/ou un pigment à base d'au moins deux oxydes mixtes d'au moins deux (semi-)métaux chacun à un ou plusieurs niveaux d'oxydation.

3. Utilisation selon la revendication 2, **caractérisée en ce qu'**il s'agit d'un oxyde mixte de fer et de manganèse.

4. Utilisation selon la revendication 3, **caractérisée en ce qu'**il s'agit d'un oxyde mixte de fer et de manganèse contenant de l'oxyde de cuivre.

5. Utilisation selon la revendication 4, **caractérisée en ce que** l'oxyde mixte de fer et de manganèse peut être obtenu par une calcination d'oxyde de manganèse (II), d'oxyde de manganèse (III), d'oxyde de fer (II) et d'oxyde de fer (III) et d'oxyde de cuivre (II).

6. Utilisation selon la revendication 5, **caractérisée en ce que** le pigment appartient au groupe des pigments ayant la désignation d'indice de couleur Pigment Black 26.

7. Utilisation selon l'une quelconque des revendications précédentes, **caractérisée en ce que** la proportion de pigment oxyde par rapport à la masse totale de la composition est de 10 à 50 % en poids.

8. Utilisation selon l'une quelconque des revendications précédentes, **caractérisée en ce que** R¹ ou R² = -CH₃, -CH₂CH₃, -CH₂CH₂CH₃, -CH(CH₃)₂.

9. Utilisation selon l'une quelconque des revendications précédentes, **caractérisée en ce que** le liant inorganique de la formule générique SiₐR¹_{b}O_{c}(OR²)_{d} a été fabriqué à partir d'un mélange de SiCH₃(OCH₂CH₃)₃ et de Si(OCH₂CH₃)₄.

10. Utilisation selon l'une quelconque des revendications précédentes, **caractérisée en ce que** ledit au moins un solvant est choisi parmi un alcool, un ester alkylique, un alcoxyalcool et/ou un ester alcoxyalkylique.

11. Utilisation selon la revendication 10, **caractérisée en ce que** ledit au moins un solvant est choisi dans le groupe constitué par le 1-méthoxy-2-propanol, le lactate d'éthyle, l'acétate de butyle, le benzoate d'éthyle, l'acétate monométhyléthylique de propylène glycol, l'éther monoéthylique de tri(éthylène glycol), l'éthanol, l'isopropanol et le butanol.

12. Procédé de fabrication d'une composition de revêtement telle que décrite dans la revendication 9, comprenant les étapes suivantes :
- le mélange de SiCH₃(OCH₂CH₃)₃ et de Si(OCH₂CH₃)₄ dans une solution aqueuse avec un acide ou un ester d'acide,
- la mise en réaction pour former les composés de formule générique Siₐ(CH₃)_{b}O_{c}(OCH₂CH₃)_{d} et
- le mélange
- avec au moins un pigment oxyde, qui conduit après l'ajout d'un mélange constitué par 15 ml d'acide oxalique 1 M et 15 ml d'acide chlorhydrique aqueux à 20 % par rapport à 1 g de substance dans des conditions standard à une augmentation de température d'au moins 4 °C, et
- au moins un solvant.

13. Procédé de fabrication d'un revêtement non conducteur sur un substrat, selon lequel un substrat est revêtu avec une composition de revêtement liquide telle que décrite dans l'une quelconque des revendications 1 à 11, éventuellement séché, puis durci.
